# EUROPEAN PATENT SPECIFICATION

(11) **EP 4 592 552 B1**
(45) Date of publication and mention of the grant of the patent: **23.09.2026**
(21) Application number: 24154335.4
(22) Date of filing: 29.01.2024
(51) Int. Cl.: F16H 3/089

(54) **A TRANSMISSION FOR A VEHICLE**
GETRIEBE FÜR EIN FAHRZEUG
TRANSMISSION POUR VÉHICULE

(43) Date of publication of application: 30.07.2025
(73) Proprietor: VOLVO TRUCK CORPORATION, 405 08 Göteborg (SE)
(72) Inventor: Mayoux, Sylvain, 69008 Lyon (FR); Barillot, Thomas, 69440 Mornant (FR)
(74) Representative: Kransell & Wennborg KB

(56) References cited:
- WO-A1-2023/182326
- CN-A- 113 733 881
- CN-A- 114 087 322
- DE-A1- 102022 204 850
- US-A1- 2022 074 475

## Description

### TECHNICAL FIELD

The present invention relates to a transmission for a vehicle, a powertrain, and a vehicle. The invention can be applied to medium-duty and/or heavy-duty vehicles, such as trucks, buses, and construction equipment, among other vehicle types. Although the invention may be described with respect to a particular vehicle, the invention is not restricted to any particular vehicle.

### BACKGROUND

The transport sector is currently moving towards electromobility to reduce emissions in connection with, e.g., transportation of goods using heavy-duty vehicles. Electrically operated vehicles use one or more electric motors for propulsion of the vehicle, and one or more battery packs for storing and supplying electric energy. Such battery packs are however space consuming, meaning that the available space for fitting other components may be more limited than in a conventional vehicle driven by a combustion engine. Hence, there is a strive to develop more compact powertrains for electrically operated vehicles, including more compact transmissions.

The documents US 2022/074475 A1 and DE 10 2022 204850 A1 relate to transmissions for vehicles which can be drivingly connected to an electric machine.

### SUMMARY

According to the invention, a transmission for a vehicle is provided. The transmission comprises:
- an input component, such as an input shaft, configured to be drivingly connected to a prime mover of the vehicle;
- a first intermediate shaft and a second intermediate shaft;
- an output assembly configured to be drivingly connected to at least one driven wheel of the vehicle;
- a primary gearwheel arrangement configured to simultaneously transfer torque from the input shaft to the first and second intermediate shafts, respectively; and
- a secondary gearwheel arrangement configured to simultaneously transfer torque from each one of the first and second intermediate shafts to the output assembly.

The first aspect of the invention may seek to provide an at least in some aspect improved transmission suitable for use in an electrically operated vehicle, in particular for use in a medium-duty electrically operated vehicle driven by a single electric machine, and in electrically operated vehicles using one electric machine per driven axle of the vehicle. A technical benefit may include the provision of a transmission which is relatively compact and thereby allows allocating more space for battery packs, bodybuilders, fuel cell equipment, etc. By the secondary gearwheel arrangement configured to simultaneously transfer torque from each one of the first and second intermediate shafts to the output assembly, a power-split configuration is provided, in which torque is simultaneously transmitted from the input shaft to the output assembly via two different torque paths. Hence, components of the transmission may be subjected to lower stress levels, which allows for smaller gear designs, such as reduced gearwheel diameters and gear face widths. The transmission may thereby be made lighter and more compact.

The secondary gearwheel arrangement may typically serve to reduce an input rotational speed originating from the prime mover, thereby increasing the output torque. This is particularly useful for a prime mover in the form of an electrical machine, having a relatively high rotational speed in comparison with an internal combustion engine.

**In** some examples, including in at least one preferred example, optionally, the primary gearwheel arrangement is configured to transfer torque from the input component, such as from the input shaft, to the first and second intermediate shafts via at least one primary reduction stage. A technical benefit may include the possibility to achieve relatively large reduction ratios by reducing the rotational speed provided by the primary mover at the primary gearwheel arrangement, in addition to any further reduction achieved by the secondary gearwheel arrangement. This may be particularly useful for vehicle starts in uphill slopes.

**In** some examples, including in at least one preferred example, optionally, the at least one primary reduction stage comprises a primary pinion drivingly connected to the input component, such as to the input shaft, the primary pinion being in simultaneous meshing engagement with a first intermediate reduction gearwheel arranged on the first intermediate shaft and a second intermediate reduction gearwheel arranged on the second intermediate shaft.

In some examples, including in at least one preferred example, optionally, the at least one primary reduction stage comprises a first primary reduction stage and a second primary reduction stage. A technical benefit may include a further reduction of the rotational speed from the prime mover. This may be particularly useful to achieve a reduction ratio suitable for starting of heavy-duty vehicles, and also for medium-duty vehicles.

In some examples, including in at least one preferred example, optionally, the primary gearwheel arrangement comprises a common intermediate shaft on which the primary pinion is arranged.

In some examples, including in at least one preferred example, optionally, the first primary reduction stage comprises a first primary pinion arranged on the input shaft and a first primary reduction gearwheel arranged on the common intermediate shaft, and wherein the second primary reduction stage comprises the primary pinion being in simultaneous meshing engagement with the first intermediate reduction gearwheel and the second intermediate reduction gearwheel.

In some examples, including in at least one preferred example, optionally, the secondary gearwheel arrangement is configured to simultaneously transfer torque from each one of the first and second intermediate shafts to the output assembly at one of at least two selectable gear ratios. A technical benefit may include the provision of one gear ratio for vehicle startability and one gear ratio for cruising, hence ensuring efficiency during cruising as well as sufficient torque at start-up.

According to the invention, the secondary gearwheel arrangement comprises at least one gear plane, each one of the at least one gear plane comprising a first secondary pinion arranged on the first intermediate shaft, a second secondary pinion arranged on the second intermediate shaft, and a secondary reduction gearwheel of the output assembly, the first and second secondary pinions of each gear plane being in simultaneous meshing engagement with the secondary reduction gearwheel of that gear plane. A technical benefit may include reduced stress levels on the pinions and gearwheels in comparison with transmissions in which a single torque path is used.

According to the invention, the at least one gear plane comprises a first gear plane configured for torque transfer at a first reduction ratio and a second gear plane configured for torque transfer at a second reduction ratio. A technical benefit may include the provision of one gear ratio for vehicle startability and one gear ratio for cruising, hence ensuring efficiency during cruising as well as sufficient torque at start-up. The first gear plane and the second gear plane are separated in an axial direction of the intermediate shafts.

According to the invention, the transmission further comprises a gear engaging device selectively settable to one of at least a first position in which torque is transferrable between the input component, such as the input shaft, and the output assembly via the first gear plane, and a second position in which torque is transferrable between the input component, such as the input shaft, and the output assembly via the second gear plane.

In some examples, including in at least one preferred example, optionally, the gear engaging device is further selectively settable to a neutral position in which no torque is transferrable between the input component, such as the input shaft, and the output assembly.

According to the invention, the gear engaging device comprises a first sleeve arranged on the first intermediate shaft and a second sleeve arranged on the second intermediate shaft, the first and second sleeves being configured to be operated in common.

In some examples, including in at least one preferred example, optionally, the output assembly comprises a differential gear set.

In some examples, including in at least one preferred example, optionally, the secondary reduction gearwheel of each gear plane is fixedly arranged on a housing component of the differential gear set.

In some examples, including in at least one preferred example, optionally, the secondary reduction gearwheel of each gear plane is rotatably arranged on a housing component of the differential gear set, the first secondary pinion is fixedly arranged on the first intermediate shaft, the second secondary pinion is fixedly arranged on the second intermediate shaft, and wherein the gear engaging device comprises a clutch for selectively engaging one of the secondary reduction gearwheel with the housing component. The clutch may be a two-position clutch or a three-position clutch including a neutral position.

In some examples, including in at least one preferred example, optionally, the input component is an input shaft arranged in parallel with at least one wheel shaft of the output assembly.

According to a further example of the invention, a powertrain for a vehicle is provided. The powertrain comprises a transmission according to the invention and a prime mover drivingly connected or connectable to the input component. The powertrain may comprise a single prime mover.

Advantages and advantageous features of the powertrain according to the second aspect correspond to those of the first aspect of the disclosure.

In some examples, including in at least one preferred example, optionally, the prime mover is an electric machine.

According to a still further example of the invention, a vehicle comprising the powertrain according to the further example of the invention is provided. The vehicle may be a medium-duty or a heavy-duty vehicle, such as a truck, a working machine, or a bus.

### BRIEF DESCRIPTION OF THE DRAWINGS

Examples are described in more detail below with reference to the appended drawings.
**FIG. 1** is an exemplary vehicle according to an example.
**FIG. 2** is a schematic view of an exemplary powertrain according to an example.
**FIG. 3a** is an exemplary transmission according to an example.
**FIG. 3b** is another view of the transmission in FIG. 3a.
**FIG. 4** is an exemplary powertrain according to an example.
**FIG. 5** is another view of the powertrain illustrated in FIG. 4.
**FIG. 6** is a schematic view of an exemplary powertrain according to another example.

The drawings are not necessarily drawn to scale. It shall also be noted that some details in the drawings may be exaggerated to better describe and illustrate the particular example. Like reference characters refer to like elements throughout the description, unless expressed otherwise. Some reference characters may have been omitted in some of the drawings for clarity.

### DETAILED DESCRIPTION

The detailed description set forth below provides information and examples of the disclosed technology with sufficient detail to enable those skilled in the art to practice the invention.

Electrically operated vehicles use one or more electric motors for propulsion of the vehicle, and one or more battery packs for storing and supplying electric energy. Such battery packs are space consuming, meaning that the available space for fitting other components may be more limited than in a conventional vehicle driven by a combustion engine. More compact powertrains, including more compact transmissions, are therefore useful to fit in the limited space of an electric vehicle.

While the electric motor has a wider operating range in terms of rotational speed than a combustion engine, it is most efficient at relatively high rotational speeds, at which the torque delivered is relatively low. In order to deliver sufficient torque when the vehicle is started in uphill slopes, a relatively large reduction ratio is therefore required. The large reduction ratio necessitates more than one reduction stage, and consequently occupies space in the vehicle. Furthermore, the reduction ratio necessary to provide startability is generally unsuitable for cruising, in which lower torque is needed. To be able to run the electric motor as efficiently as possible, a gear with a smaller reduction ratio should be provided for cruising. Thus, at least two gear ratios are typically needed.

Compacting a transmission may lead to highly loaded gears with high stress levels and increased wear. In view of this, it is desirable to provide a transmission for an electrically operated vehicle which is compact, but with acceptable stress levels.

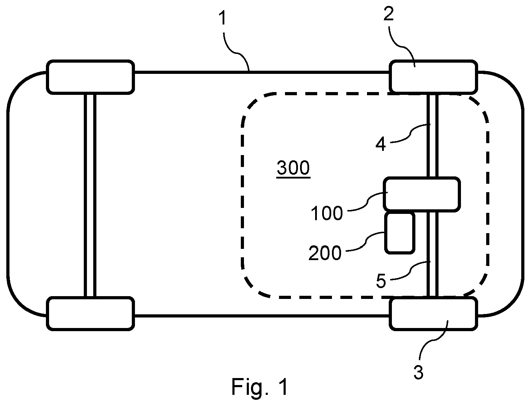

**FIG. 1** is an exemplary vehicle 1 according to an example. The vehicle 1 may in some examples be a medium-duty vehicle, such as a medium-duty truck, bus, or working machine. In other examples, the vehicle 1 may be a heavy-duty vehicle. The vehicle 1 comprises a powertrain 300, for propulsion of the vehicle 1. The powertrain 300 comprises a prime mover 200 in the form of an electric machine, which is drivingly connectable to wheel shafts 4, 5 by a transmission 100. Each one of the wheel shafts 4, 5 is drivingly connected to a respective driven wheel 2, 3. The driven wheels 2, 3 may be rear wheels of the vehicle 1. It shall however be noted that driven wheels may be provided at any other location, such as at the front of the vehicle. In other examples, driven wheels may be used for driving crawler members of the vehicle, e.g., of an excavator.

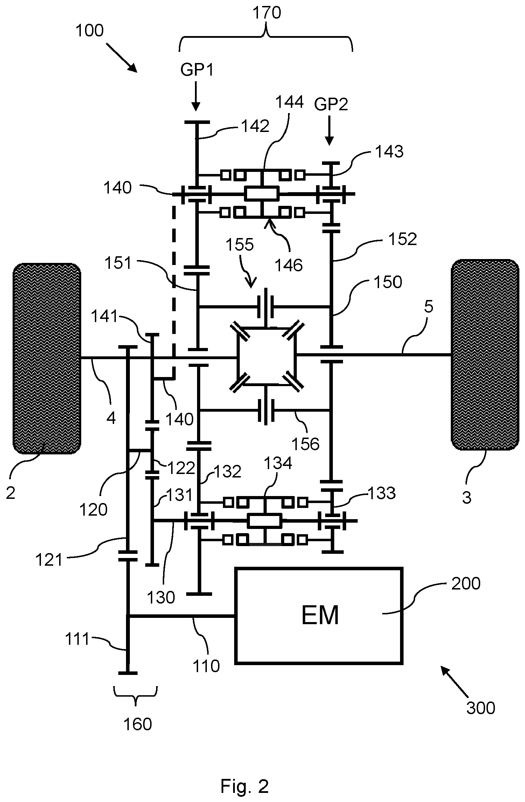

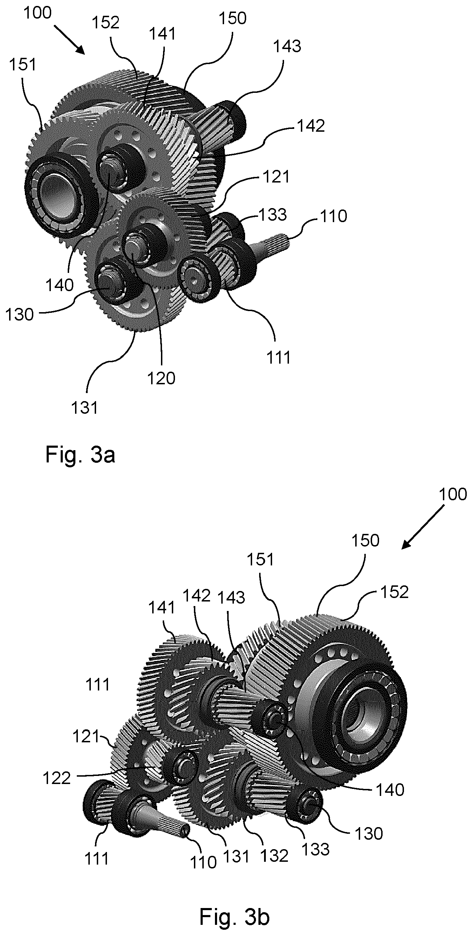

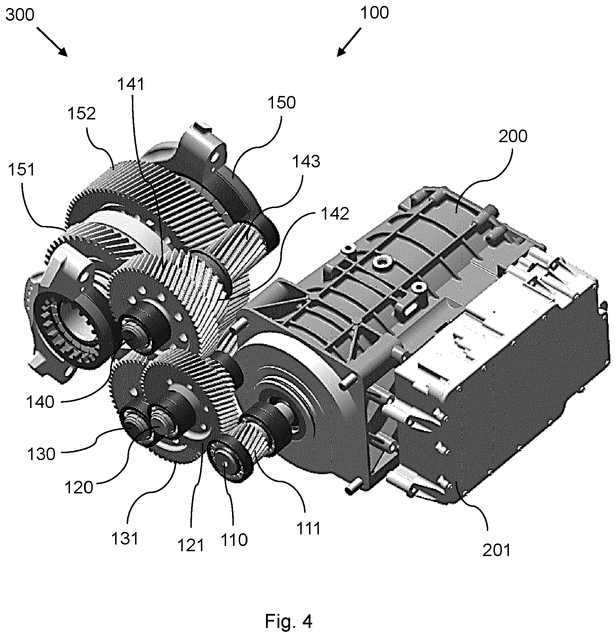

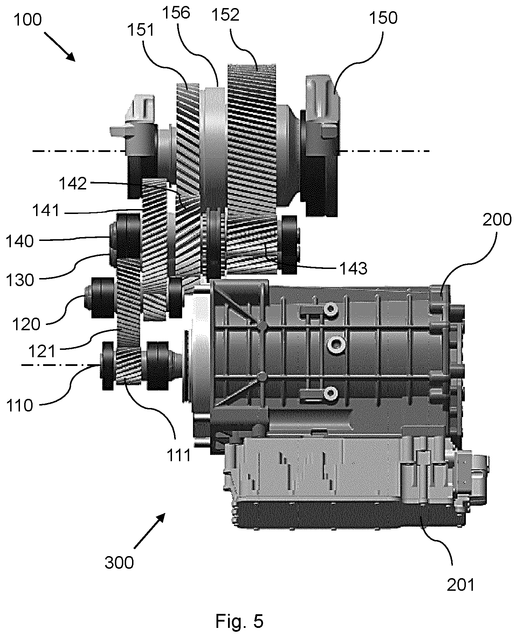

**FIG. 2** illustrates a powertrain 300 according to a first example. Reference is also made to **FIG. 3a****-b** illustrating a transmission 100 that may be used in the powertrain 300 according to the first example, and to **FIG. 4** and **FIG. 5** illustrating an example of a powertrain 300 such as the one schematically illustrated in **FIG. 2****.** The powertrain 300 may, e.g., be applied in the vehicle 1 illustrated in **FIG. 1****.** A prime mover 200 in the form of an electric machine is drivingly connected to a transmission 100 via an input component in the form of an input shaft 110. The input shaft 110 may be permanently connected to the prime mover 200, or a clutch (not illustrated) may be provided for selectively connecting and disconnecting the input shaft 110 to/from the prime mover 200.

The transmission 100 comprises a first intermediate shaft 130 and a second intermediate shaft 140 that are arranged in parallel with one another. It further comprises a primary gearwheel arrangement 160 configured to simultaneously transfer torque from the input shaft 110 to the first and second intermediate shafts 130, 140, respectively. The transmission 100 also comprises an output assembly 150 configured to be drivingly connected to the driven wheels 2, 3 of the vehicle 1. For this purpose, the output assembly 150 herein comprises two wheel shafts 4, 5, although in other examples, a single output shaft may be provided. The transmission 100 further comprises a secondary gearwheel arrangement 170 configured to simultaneously transfer torque from each one of the first and second intermediate shafts 130, 140 to the output assembly 150. Hence, the transmission 100 has a power-split configuration in which two torque paths are provided, via which torque can be transmitted simultaneously from the input shaft 110 to the output assembly 150.

In the illustrated first example, the primary gearwheel arrangement 160 is configured to transfer torque from the input shaft 110 to the first and second intermediate shafts 130, 140 via two primary reduction stages, a first primary reduction stage and a second primary reduction stage.

The first primary reduction stage comprises a first primary pinion 111 arranged on the input shaft 110, herein fixed on the input shaft 110, and a first primary reduction gearwheel 121 arranged on a common intermediate shaft 120. The first primary pinion 111 is herein fixed on the input shaft 110, although in other embodiments it may be drivingly connectable to the input shaft by a clutch or similar. The first primary pinion 111 is in meshing engagement with the first primary reduction gearwheel 121.

The second primary reduction stage comprises a second primary pinion 122, which is fixed on the common intermediate shaft 120 and which is in simultaneous meshing engagement with a first intermediate reduction gearwheel 131 arranged on the first intermediate shaft 130 and a second intermediate reduction gearwheel 141 arranged on the second intermediate shaft 140. The first and second intermediate reduction gearwheels 131, 141 have the same diameter, and hence the same number of gear teeth.

The primary gearwheel arrangement 160 hence comprises at least one primary pinion, herein the first and second primary pinions 111, 122, drivingly connected to the input shaft 110.

The output assembly 150 may comprise a differential gear set 155 as illustrated in FIG. 2. The differential gear set 155 is in the illustrated example arranged in a housing component 156 and is configured to transfer torque from the secondary gearwheel arrangement 170 to each one of the wheel shafts 4, 5.

The secondary gearwheel arrangement 170 may be configured to simultaneously transfer torque from each one of the first and second intermediate shafts 130, 140 to the output assembly 150 at one of at least two selectable gear ratios, herein two selectable gear ratios. For this purpose, the secondary gearwheel arrangement comprises first and second gear planes GP1, GP2, the gear planes GP1, GP2 being separated from one another in an axial direction of the intermediate shafts 130, 140. The first gear plane GP1 is suitable for vehicle cruise conditions, while the second gear plane GP2 is suitable when more torque is desired, such as for starting of the vehicle 1 in an uphill slope. Each gear plane GP1, GP2 comprises a first secondary pinion 132, 133 rotatably arranged on the first intermediate shaft 130, a second secondary pinion 142, 143 rotatably arranged on the second intermediate shaft 140, and a secondary reduction gearwheel 151, 152 fixed on the housing component 156 of the output assembly 150. In the first gear plane GP1, the first and second secondary pinions 132, 142 are in simultaneous meshing engagement with the secondary reduction gearwheel 151 of the first gear plane GP1. In the second gear plane GP2, the first and second secondary pinions 133, 143, are in simultaneous meshing engagement with the secondary reduction gearwheel 152 of the second gear plane GP2. The first gear plane GP1 is configured for torque transfer at a first reduction ratio and the second gear plane GP2 is configured for torque transfer at a second reduction ratio.

A gear engaging device 146 comprising first and second sleeves 134, 144 is provided for selecting one of the gear planes GP1, GP2 for torque transfer. The gear engaging device 146 is selectively settable to one of at least a first position, to the left in FIG. 2, in which torque is transferrable between the input shaft 110 and the output assembly 150 via the first gear plane GP1, and a second position, to the right in FIG. 2, in which torque is transferrable between the input shaft 110 and the output assembly 150 via the second gear plane GP2. In the illustrated embodiment, a neutral position, in the middle, is also provided in which no torque is transferable via the first and second gear planes GP1, GP2. The illustrated gear engaging devices 134, 144 are three-position dog clutches configured to be actuated by a shift fork (not shown). In alternative embodiments, two-position dog clutches without neutral position may be provided.

The first sleeve 134 is in the illustrated example arranged on the first intermediate shaft 130 and a second sleeve 144 is arranged on the second intermediate shaft 140. The first and second sleeves 134, 144 may be configured to be operated in common by an actuator configured to simultaneously move both sleeves 134, 144, such as a common dual fork (not shown). In other embodiments, separate actuators, such as separate shift forks may be provided. For practical reasons, common actuation can be realized by two separate actuators which are synchronized by electronic control or by a common air supply.

In other non-illustrated examples, the secondary reduction gearwheels may not be fixed to the housing component, but rotatably mounted thereto, while the first and second secondary pinions are fixed to the respective intermediate shafts. In those cases, a gear shifting device comprising a three-position dog clutch could be provided for selectively fixing the secondary reduction gearwheels to the housing component, or a two-position dog clutch if another clutch is added elsewhere for providing a neutral position.

As illustrated in **FIG.** 4 and **FIG. 5****,** an electric motor drive 201 is provided for controlling the electric machine 200. A single electric machine 200 is used, although it may in other examples be possible to have more than one electric machine. For example, two electric machines may be provided, wherein each electric machine may be configured to drive one wheel shaft of the vehicle via a transmission as disclosed herein, or wherein each electric machine is configured to drive one driven axle of the vehicle via a transmission as disclosed herein, or wherein both electric machines drive the same input component, such as the input shaft 110.

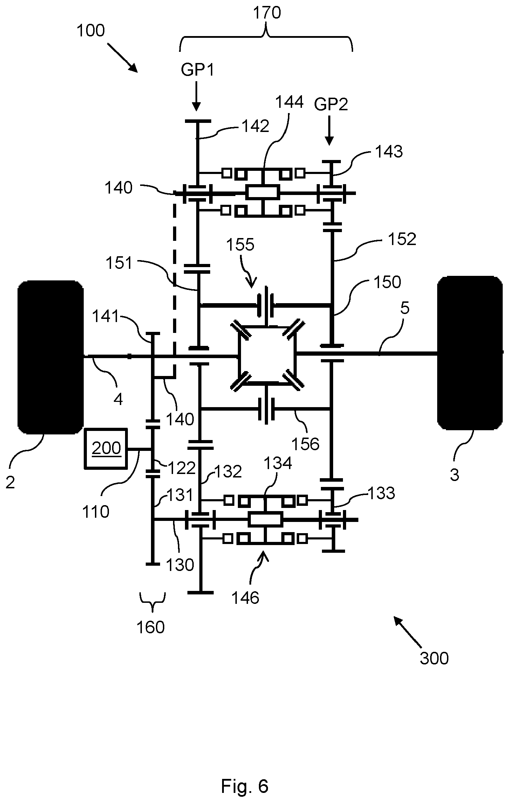

**FIG. 6** illustrates a powertrain 300 according to a second example. The powertrain according to the second example only differs from that of the first example in that the primary gearwheel arrangement 160 is configured to transfer torque from the input shaft 110 to the first and second intermediate shafts 130, 140 via a single primary reduction stage. The primary gearwheel arrangement 160 hence comprises a single primary pinion 122 drivingly connected to the input shaft 110. The primary pinion 122 is in the second example mounted for common rotation with the input shaft 110. The primary pinion 122 is in simultaneous meshing engagement with the first intermediate reduction gearwheel 131, fixed for common rotation with the first intermediate shaft 130, and the second intermediate reduction gearwheel 141, fixed for common rotation with the second intermediate shaft 140.

In some examples, the primary gearwheel arrangement 160 as illustrated in FIG. 6 may be arranged to transfer torque to the first and second intermediate shafts 130, 140 without any speed reduction, i.e., at a 1:1 ratio, or even at a multiplication ratio. This might be the case with a very high torque electric machine, or with a prime mover in the form of a hydraulic motor.

In other non-illustrated examples, more than two primary reduction stages may be provided.

In all the illustrated examples, the input shaft 110 is arranged in parallel with the wheel shafts 4, 5 of the output assembly 150. In other examples, the input shaft may be arranged to extend at an angle with respect to the at least one wheel shaft, such as at a right angle thereto, or at any angle between a straight angle and a right angle.

Instead of an input shaft 110, another input component may be used. For example, the input component could be a gearwheel directly connected to the electric machine. In the example illustrated in FIG. 6, the primary pinion 122 may be driven directly by the electric machine 200, without any input shaft. Similarly, in the example illustrated in FIG. 2, the electric machine could be arranged to directly drive the first primary pinion 111.

The terminology used herein is for the purpose of describing particular aspects only and is not intended to be limiting of the invention. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present invention.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this invention belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present invention is not limited to the aspects described above and illustrated in the drawings; rather, the skilled person will recognize that many changes and modifications may be made within the scope of the present invention. In the drawings and specification, there have been disclosed aspects for purposes of illustration only and not for purposes of limitation, the scope of the invention being set forth in the following claims.

## Claims

1. A transmission (100) for a vehicle (1), the transmission (100) comprising:
- an input component, such as an input shaft (110), configured to be drivingly connected to a prime mover (200) of the vehicle (1);
- a first intermediate shaft (130) and a second intermediate shaft (140);
- an output assembly (150) configured to be drivingly connected to at least one driven wheel (2, 3) of the vehicle (1);
- a primary gearwheel arrangement (160) configured to simultaneously transfer torque from the input shaft (110) to the first and second intermediate shafts (130, 140), respectively; and
- a secondary gearwheel arrangement (170) configured to simultaneously transfer torque from each one of the first and second intermediate shafts (130, 140) to the output assembly (150)
wherein the secondary gearwheel arrangement comprises at least one gear plane (GP1, GP2), each one of the at least one gear plane (GP1, GP2) comprising a first secondary pinion (132, 133) arranged on the first intermediate shaft (130), a second secondary pinion (142, 143) arranged on the second intermediate shaft (140), and a secondary reduction gearwheel (151, 152) of the output assembly (150), the first and second secondary pinions (132, 133, 142, 143) of each gear plane (GP1, GP2) being in simultaneous meshing engagement with the secondary reduction gearwheel (151, 152) of that gear plane (GP1, GP2), **characterized in that**,
the at least one gear plane (GP1, GP2) comprises a first gear plane (GP1) configured for torque transfer at a first reduction ratio and a second gear plane (GP2) configured for torque transfer at a second reduction ratio,
the transmission (100) further comprising a gear engaging device (146) selectively settable to one of at least a first position in which torque is transferrable between the input component and the output assembly (150) via the first gear plane (GP1), and a second position in which torque is transferrable between the input shaft (110) and the output assembly (150) via the second gear plane (GP2),
wherein the gear engaging device (146) comprises a first sleeve (134) arranged on the first intermediate shaft (130) and a second sleeve (144) arranged on the second intermediate shaft (140), the first and second sleeves (134, 144) being configured to be operated in common.

2. The transmission according to claim 1, wherein the primary gearwheel arrangement (160) is configured to transfer torque from the input component, such as from the input shaft (110), to the first and second intermediate shafts (130, 140) via at least one primary reduction stage.

3. The transmission according to claim 2, wherein the at least one primary reduction stage comprises a primary pinion (122) drivingly connected to the input component, such as to the input shaft (110), the primary pinion (122) being in simultaneous meshing engagement with a first intermediate reduction gearwheel (131) arranged on the first intermediate shaft (130) and a second intermediate reduction gearwheel (141) arranged on the second intermediate shaft (140).

4. The transmission according to claim 3, wherein the at least one primary reduction stage comprises a first primary reduction stage and a second primary reduction stage.

5. The transmission according to claim 4, wherein the primary gearwheel arrangement (160) comprises a common intermediate shaft (120) on which the primary pinion (122) is arranged.

6. The transmission according to claim 5, wherein the input component is an input shaft (110), and wherein the first primary reduction stage comprises a first primary pinion (111) arranged on the input shaft (110) and a first primary reduction gearwheel (121) arranged on the common intermediate shaft (120), and wherein the second primary reduction stage comprises the primary pinion (122) being in simultaneous meshing engagement with the first intermediate reduction gearwheel (131) and the second intermediate reduction gearwheel (141).

7. The transmission according to any one of the preceding claims, wherein the secondary gearwheel arrangement (170) is configured to simultaneously transfer torque from each one of the first and second intermediate shafts (130, 140) to the output assembly (150) at one of at least two selectable gear ratios.

8. The transmission according to any one of the preceding claims, wherein the gear engaging device (146) is further selectively settable to a neutral position in which no torque is transferrable between the input component and the output assembly (150).

9. The transmission according to any one of the preceding claims, wherein the output assembly (150) comprises a differential gear set (155).

10. A powertrain (300) for a vehicle, the powertrain (300) comprising a transmission (100) according to any one of the preceding claims and a prime mover (200) drivingly connected or connectable to the input shaft component.

11. A vehicle (1) comprising the powertrain (300) according to claim 10.

## Patentansprüche

1. Getriebe (100) für ein Fahrzeug (1), wobei das Getriebe (100) Folgendes umfasst:
- eine Eingangskomponente, wie beispielsweise eine Eingangswelle (110), die dazu konfiguriert ist, antriebsmäßig mit einem Antriebsmotor (200) des Fahrzeugs (1) verbunden zu sein;
- eine erste Zwischenwelle (130) und eine zweite Zwischenwelle (140);
- eine Ausgangsbaugruppe (150), die dazu konfiguriert ist, antriebsmäßig mit mindestens einem angetriebenen Rad (2, 3) des Fahrzeugs (1) verbunden zu sein;
- eine Primärzahnradanordnung (160), die dazu konfiguriert ist, gleichzeitig ein Drehmoment von der Eingangswelle (110) auf die erste bzw. zweite Zwischenwelle (130, 140) zu übertragen; und
- eine Sekundärzahnradanordnung (170), die dazu konfiguriert ist, gleichzeitig ein Drehmoment von jeder der ersten und der zweiten Zwischenwelle (130, 140) auf die Ausgangsbaugruppe (150) zu übertragen,
wobei die Sekundärzahnradanordnung mindestens eine Zahnradebene (GP1, GP2) umfasst, wobei jede der mindestens einen Zahnradebene (GP1, GP2) ein erstes Sekundärritzel (132, 133), das auf der ersten Zwischenwelle (130) angeordnet ist, ein zweites Sekundärritzel (142, 143), das auf der zweiten Zwischenwelle (140) angeordnet ist, und ein Sekundäruntersetzungszahnrad (151, 152) der Ausgangsbaugruppe (150) umfasst, wobei das erste und das zweite Sekundärritzel (132, 133, 142, 143) jeder Zahnradebene (GP1, GP2) gleichzeitig mit dem Sekundäruntersetzungszahnrad (151, 152) der Zahnradebene (GP1, GP2) in Kämmeingriff stehen, **dadurch gekennzeichnet, dass**
die mindestens eine Zahnradebene (GP1, GP2) eine erste Zahnradebene (GP1), die für die Drehmomentübertragung mit einem ersten Untersetzungsverhältnis konfiguriert ist, und eine zweite Zahnradebene (GP2) umfasst, die für die Drehmomentübertragung mit einem zweiten Untersetzungsverhältnis konfiguriert ist,
das Getriebe (100) ferner eine Getriebe-Eingriffsvorrichtung (146) umfasst, die selektiv in eine von mindestens einer ersten Position, in der ein Drehmoment zwischen der Eingangskomponente und der Ausgangsbaugruppe (150) über die erste Zahnradebene (GP1) übertragbar ist, und einer zweiten Position einstellbar ist, in der ein Drehmoment zwischen der Eingangswelle (110) und der Ausgangsbaugruppe (150) über die zweite Zahnradebene (GP2) übertragbar ist,
wobei die Getriebe-Eingriffsvorrichtung (146) eine erste Hülse (134), die auf der ersten Zwischenwelle (130) angeordnet ist, und eine zweite Hülse (144) umfasst, die auf der zweiten Zwischenwelle (140) angeordnet ist, wobei die erste und die zweite Hülse (134, 144) dazu konfiguriert sind, gemeinsam betätigt zu werden.

2. Getriebe nach Anspruch 1, wobei die Primärzahnradanordnung (160) dazu konfiguriert ist, ein Drehmoment von der Eingangskomponente, beispielsweise von der Eingangswelle (110), auf die erste und die zweite Zwischenwelle (130, 140) über mindestens eine Primäruntersetzungsstufe zu übertragen.

3. Getriebe nach Anspruch 2, wobei die mindestens eine Primäruntersetzungsstufe ein Primärritzel (122) umfasst, das antriebsmäßig mit der Eingangskomponente, beispielsweise mit der Eingangswelle (110), verbunden ist, wobei das Primärritzel (122) gleichzeitig mit einem ersten Zwischenuntersetzungszahnrad (131), das auf der ersten Zwischenwelle (130) angeordnet ist, und einem zweiten Zwischenuntersetzungszahnrad (141), das auf der zweiten Zwischenwelle (140) angeordnet ist, in Kämmeingriff steht.

4. Getriebe nach Anspruch 3, wobei die mindestens eine Primäruntersetzungsstufe eine erste Primäruntersetzungsstufe und eine zweite Primäruntersetzungsstufe umfasst.

5. Getriebe nach Anspruch 4, wobei die Primärzahnradanordnung (160) eine gemeinsame Zwischenwelle (120) umfasst, auf der das Primärritzel (122) angeordnet ist.

6. Getriebe nach Anspruch 5, wobei die Eingangskomponente eine Eingangswelle (110) ist, und wobei die erste Primäruntersetzungsstufe ein erstes Primärritzel (111), das auf der Eingangswelle (110) angeordnet ist, und ein erstes Primäruntersetzungszahnrad (121) umfasst, das auf der gemeinsamen Zwischenwelle (120) angeordnet ist, und wobei die zweite Primäruntersetzungsstufe das Primärritzel (122) umfasst, das gleichzeitig mit dem ersten Zwischenuntersetzungszahnrad (131) und dem zweiten Zwischenuntersetzungszahnrad (141) in Kämmeingriff steht.

7. Getriebe nach einem der vorhergehenden Ansprüche, wobei die Sekundärzahnradanordnung (170) dazu konfiguriert ist, gleichzeitig ein Drehmoment von der ersten und der zweiten Zwischenwelle (130, 140) auf die Ausgangsbaugruppe (150) mit einem von mindestens zwei auswählbaren Übersetzungsverhältnissen zu übertragen.

8. Getriebe nach einem der vorhergehenden Ansprüche, wobei die Getriebe-Eingriffsvorrichtung (146) ferner selektiv in eine Neutralposition einstellbar ist, in der kein Drehmoment zwischen der Eingangskomponente und der Ausgangsbaugruppe (150) übertragbar ist.

9. Getriebe nach einem der vorhergehenden Ansprüche, wobei die Ausgangsbaugruppe (150) ein Differentialgetriebe (155) umfasst.

10. Antriebsstrang (300) für ein Fahrzeug, wobei der Antriebsstrang (300) ein Getriebe (100) nach einem der vorhergehenden Ansprüche und einen Antriebsmotor (200) umfasst, der antriebsmäßig mit der Eingangswellenkomponente verbunden oder verbindbar ist.

11. Fahrzeug (1), das den Antriebsstrang (300) nach Anspruch 10 umfasst.

## Revendications

1. Transmission (100) pour véhicule (1), la transmission (100) comprenant :
- un composant d'entrée, tel qu'un arbre d'entrée (110), configuré pour être relié de manière motrice à un moteur principal (200) du véhicule (1) ;
- un premier arbre intermédiaire (130) et un second arbre intermédiaire (140) ;
- un ensemble de sortie (150) configuré pour être relié de manière motrice à au moins une roue motrice (2, 3) du véhicule (1) ;
- un agencement de roue dentée primaire (160) configuré pour transférer simultanément le couple de l'arbre d'entrée (110) aux premier et second arbres intermédiaires (130, 140), respectivement ; et
- un agencement de roue dentée secondaire (170) configuré pour transférer simultanément le couple de chacun des premier et second arbres intermédiaires (130, 140) à l'ensemble de sortie (150),
l'agencement de roue dentée secondaire comprenant au moins un plan d'engrenage (GP1, GP2), chacun de l'au moins un plan d'engrenage (GP1, GP2) comprenant un premier pignon secondaire (132, 133) disposé sur le premier arbre intermédiaire (130), un second pignon secondaire (142, 143) disposé sur le second arbre intermédiaire (140), et une roue dentée de réduction secondaire (151, 152) de l'ensemble de sortie (150), les premier et second pignons secondaires (132, 133, 142, 143) de chaque plan d'engrenage (GP1, GP2) étant en prise simultanée avec la roue dentée de réduction secondaire (151, 152) de ce plan d'engrenage (GP1, GP2), **caractérisé en ce que**
ledit au moins un plan d'engrenage (GP1, GP2) comprend un premier plan d'engrenage (GP1) configuré pour le transfert de couple à un premier rapport de réduction et à un second plan d'engrenage (GP2) configuré pour le transfert de couple à un second rapport de réduction,
la transmission (100) comprend en outre un dispositif d'engrènement d'engrenage (146) pouvant être réglé sélectivement à au moins une première position dans laquelle le couple peut être transféré entre le composant d'entrée et l'ensemble de sortie (150) via le premier plan d'engrenage (GP1), et une seconde position dans laquelle le couple peut être transféré entre l'arbre d'entrée (110) et l'ensemble de sortie (150) via le second plan d'engrenage (GP2),
le dispositif d'engrènement (146) comprend un premier manchon (134) disposé sur le premier arbre intermédiaire (130) et un second manchon (144) disposé sur le second arbre intermédiaire (140), les premier et second manchons (134, 144) étant conçus pour fonctionner en commun.

2. Transmission selon la revendication 1, dans laquelle l'agencement de roue dentée primaire (160) est configuré pour transférer le couple du composant d'entrée, tel que de l'arbre d'entrée (110), aux premier et second arbres intermédiaires (130, 140) via au moins un étage de réduction primaire.

3. Transmission selon la revendication 2, dans laquelle l'au moins un étage de réduction primaire comprend un pignon primaire (122) relié de manière motrice au composant d'entrée, tel qu'à l'arbre d'entrée (110), le pignon primaire (122) étant en prise simultanée avec une première roue dentée de réduction intermédiaire (131) agencée sur le premier arbre intermédiaire (130) et une seconde roue dentée de réduction intermédiaire (141) agencée sur le second arbre intermédiaire (140).

4. Transmission selon la revendication 3, dans laquelle l'au moins un étage de réduction primaire comprend un premier étage de réduction primaire et un second étage de réduction primaire.

5. Transmission selon la revendication 4, dans laquelle l'agencement de roue dentée primaire (160) comprend un arbre intermédiaire commun (120) sur lequel le pignon primaire (122) est agencé.

6. Transmission selon la revendication 5, dans laquelle le composant d'entrée est un arbre d'entrée (110), et le premier étage de réduction primaire comprend un premier pignon primaire (111) agencé sur l'arbre d'entrée (110) et une première roue dentée de réduction primaire (121) agencée sur l'arbre intermédiaire commun (120), et le second étage de réduction primaire comprend le pignon primaire (122) en prise simultanée avec la première roue dentée de réduction intermédiaire (131) et la deuxième roue dentée de réduction intermédiaire (141).

7. Transmission selon l'une quelconque des revendications précédentes, dans laquelle l'agencement de roue dentée secondaire (170) est configuré pour transférer simultanément le couple de chacun des premier et second arbres intermédiaires (130, 140) à l'ensemble de sortie (150) à l'un d'au moins deux rapports de transmission sélectionnables.

8. Transmission selon l'une quelconque des revendications précédentes, dans laquelle le dispositif d'engagement de vitesse (146) peut en outre être réglé sélectivement dans une position neutre dans laquelle aucun couple n'est transférable entre le composant d'entrée et l'ensemble de sortie (150).

9. Transmission selon l'une quelconque des revendications précédentes, dans laquelle l'ensemble de sortie (150) comprend un train d'engrenages différentiel (155).

10. Groupe motopropulseur (300) pour un véhicule, le groupe motopropulseur (300) comprenant une transmission (100) selon l'une quelconque des revendications précédentes et un moteur principal (200) connecté de manière motrice ou pouvant être connecté au composant d'arbre d'entrée.

11. Véhicule (1) comprenant le groupe motopropulseur (300) selon la revendication 10.
